# EUROPEAN PATENT SPECIFICATION

(11) **EP 3 889 984 B1**
(45) Date of publication and mention of the grant of the patent: **31.12.2025**
(21) Application number: 19842783.3
(22) Date of filing: 26.11.2019
(51) Int. Cl.: H01H 9/10, H01H 33/666, H02B 7/06

(54) **SWITCHING AND PROTECTION MEANS FOR LOW-VOLTAGE SWITCHBOARD AND LOW-VOLTAGE SWITCHBOARD INCORPORATING SAID SWITCHING AND PROTECTION MEANS**
SCHALT- UND SCHUTZMITTEL FÜR NIEDERSPANNUNGSVERTEILER UND NIEDERSPANNUNGSVERTEILER MIT EINEM DERARTIGEN SCHALT- UND SCHUTZMITTEL
MOYEN DE MANOEUVRE ET DE PROTECTION POUR TABLEAU BASSE TENSION ET TABLEAU BASSE TENSION COMPRENANT LEDIT MOYEN DE MANOEUVRE ET DE PROTECTION

(30) Priority: 29.11.2018 ES 201831157
(43) Date of publication of application: 06.10.2021
(73) Proprietor: Ormazabal Corporate Technology, A.I.E., 48340 Amorebieta-Etxano (Vizcaya) (ES)
(72) Inventor: BARRIO RODRIGUEZ, Sergio, 48340 AMOREBIETA-ETXANO (BIZKAIA) (ES); ARANAGA LOPEZ, Severo, 48340 AMOREBIETA-ETXANO (BIZKAIA) (ES); LARRIETA ZUBIA, Javier, 48340 AMOREBIETA-ETXANO (BIZKAIA) (ES)
(74) Representative: Herrero & Asociados, S.L.
(86) International application number: PCT/ES2019/070803
(87) International publication number: WO 2020/109640

(56) References cited:
- EP-A1- 0 670 581
- WO-A1-2017/168429
- CN-Y- 2 316 719
- US-A1- 2017 004 948
- US-B1- 7 186 942

## Description

### Object of the Invention

The present invention relates to switching and protection means installed in low-voltage boards, where said boards are in charge of, once the energy has been transformed to the low-voltage range, distributing the electric energy to different consumers.

The switching and protection means of the invention can replace the well-known fuse block commonly used as a protection element in low-voltage boards. The switching and protection means of the invention comprises the functions of both protecting and isolating the low-voltage board from the power source and/or the function of grounding the set of distribution busbars.

### Background of the Invention

Basically, a low-voltage board comprises a metallic or insulating enclosure inside which there are installed different electrical components such as the set of line connection busbars of the board, the distribution busbar, fuse blocks, the switching means comprising the function of isolating the low-voltage board from the power source and/or the function of grounding the set of distribution busbars, as well as the auxiliary and measurement circuit output.

The purpose of the set of line connection busbars is to electrically connect the conductors coming from the medium-voltage/low-voltage transformer with the distribution busbar, the purpose of the latter being to pass the energy coming from the set of line connection busbars to the different fuse blocks.

The fuse block has the function of protecting the electrical line suspended from same against overloads and short-circuit currents, i.e., its main function is to open the circuit when there is an electrical fault caused by either an overload or a short-circuit. Therefore, due to an electrical fault caused by an overload or a short-circuit, the fuse melts and the circuit is open, with the line suspended from said fuse block having no voltage circulating in same. Nevertheless, even though the fuse constitutes effective protection means against overloads and short-circuits, this protection means has the drawback concerning the time required to restore voltage in the line affected by the fault, which involves the need to send a skilled operator to the installation where the low-voltage board is located and replace the melted fuse or fuses.

The maintenance, repair, replacement or expansion tasks on the low-voltage board are carried out after first interrupting, for safety reasons, the service of the board itself, i.e., leaving said low-voltage board out of service, since parts of the board which are live when it is in service need to be accessed. For example, in an expansion operation, the set of busbars must be rendered temporarily unusable in order to interconnect said set of busbars and the busbars of the expansion board. To leave the low-voltage board out of service, several switching operations must be performed in the installation where said low-voltage board is located. Usually, when there is only one low-voltage board in the installation, first the medium-voltage/low-voltage transformer must be left with no voltage circulating in same, then disconnection is performed both upstream and downstream of the board, thus leaving the board without any power, and then the set of busbars must be grounded.

Furthermore, low-voltage boards comprise an auxiliary or secondary line connection, which allows the connection of an external auxiliary power source, such as a generator, for example, commonly used when there is a deficit in the generation of electric energy somewhere or when the power supply is cut off, and electric energy can thus be supplied to consumers. In some low-voltage boards, the auxiliary line connection is integrated in the actual enclosure of the board and in other cases it is integrated in the switching means comprising the function of isolating the low-voltage board from power. Therefore, it is sometimes necessary to connect the external auxiliary power source to the low-voltage board, for example, because of a deficit in the supply of energy, a load transfer, the need to replace the medium-voltage/low-voltage transformer, or the need to perform maintenance or repair tasks on the installations in which the low-voltage board is located.

On said occasions, the connection is performed with the board being out of service, i.e., before connecting the external auxiliary power source, the low-voltage board is left out of service, so means capable of isolating the low-voltage board from the power supply grid are required.

In connection with the function of isolating the low-voltage board from power and/or the function of grounding the set of distribution busbars, this is carried out by means of a break switch which is installed in the head of the low-voltage board as an element with respect to the fuse blocks. The break switch can be made up of one-pole modules, such that the break switch can be a two-pole, three-pole, or tetra-pole break switch. Each one-pole module is generally formed by a casing which partially houses therein one or more input strips and one or more output strips which are respectively connected through their free ends to the power supply and to the distribution busbars of the low-voltage board. Coupling or uncoupling means, usually metal blades, are also housed inside the casing, said means being coupled (breaking switch closed) or uncoupled (breaking switch open) with respect to the other end (inside the casing) of the input and output strips for isolating (breaking switch open) or connecting (breaking switch closed) the low-voltage board from/to the power supply.

Spanish patent with publication number ES2277729B1 can be mentioned as an example of the state of the art. This break switch is a vertical tetra-pole switch with an upper or lower line connection, and forms an interchangeable unit for being assembled in low-voltage boards. Specifically, this break switch incorporates an isolating casing inside of which a vertical tetra-pole breaking switch is housed, the input strips of which are formed by busbars that are prolonged until they project through the upper or lower part of the casing to be connected to the power supply of the low-voltage board.

Nevertheless, the addition of the break switch to the low-voltage board involves the drawback that the board must have supporting anchors, electrical connection points, etc., all of which imply larger dimensions of the board, and this affects both the transport thereof and the space for its placement. Furthermore, it involves more assembly tasks, such as, for example, the need to establish more electrical connections, and therefore increasing the risk or the probability of poorly establishing the connections, poor tightening, etc.

Document WO2017168429 discloses an integrated overload and earth fault protection system, which protects the load/electrical appliances from overload and earth fault. The system comprises Vacuum Circuit Breaker (VCB); Protection Relay; Phase Current Transformer (PCT); Unbalance Current Transformer (UCT); and load. The protection relay includes an Over Load (OL) element and Earth Fault (EF) element. The load is connected to a single/three phase AC power supply through the VCB, PCT and UCT. The UCT is positioned in between phase and neutral terminal to detect unbalance current due to earth fault. The output from the PCT and UCT is fed to the OLEF protection relay. During fault in protected zone of the load, the VCB opens to remove potential from the load. The VCB automatically controls the power supply to the system based on the output from the OLEF protection relay, which protects the load from overload and earth fault.

Document US2017004948 discloses a circuit protection device that includes a solid-state interrupter that is operable to open a circuit within a specified response time upon detection of a fault current state. A mechanical interrupter is connected in series with the solid-state interrupter. The mechanical interrupter is operable to open the circuit subsequent to the opening operation of the solid-state interrupter. A controller is coupled with the solid-state interrupter and the mechanical interrupter. The controller is operable to detect the fault current state in the circuit and to control the mechanical interrupter for coordinated operation with the solid-state interrupter. The mechanical circuit breaker can safely physically open the circuit at a low breaking current.

Document US7186942 discloses a vacuum circuit interrupter which includes a line conductor, a vacuum interrupter, a load conductor, a ground conductor and an operating mechanism. The vacuum interrupter includes a fixed conductor and a vacuum envelope containing a fixed contact and a movable contact movable between a closed-circuit position in electrical connection with the fixed contact and an open circuit position spaced apart from the fixed contact. The fixed conductor is outside of the vacuum envelope and is electrically connected to the fixed contact. The load conductor is electrically connected to the movable contact. The operating mechanism is structured to: open and close the fixed and movable contacts, and move the vacuum interrupter and the fixed conductor thereof between a first position wherein the fixed conductor is electrically connected to the line conductor, and a second position wherein the fixed conductor is electrically connected to the ground conductor.

Document EP0670581 discloses a safety power circuit breaker that is formed as an insert for a module distributor. It has plug connections arranged at the back for connection to several adjacent running collector rails. It also has clamps at the side for connecting outlet leads, low voltage fuses and a switch mechanism for the common switching of switch contacts at the collector rail and outlet sides. The low voltage fuses are arranged in parallel next to each other or one on top of another, relative to their longitudinal direction.

Document CN2316719 discloses a low-voltage vacuum circuit breaker in a low-voltage distribution system, comprising a framework, contacts, an operating mechanism, a trip, a motor, a transmission mechanism, etc. One end of a moving contact and one end of a fixed contact are sealed in a vacuum arc-extinguishing chamber; the vacuum arc-extinguishing chamber and the other end of the fixed contact are fixed on an electric conduction bracket; the other end of the moving contact is fixedly connected with a small crank arm of the transmission mechanism; the transmission mechanism and the operating mechanism are connected; the overcurrent trip is fixed on the electric conduction bracket.

Document CN105788957 provides a low-voltage AC vacuum circuit breaker and a closing method thereof. The low-voltage circuit breaker plays overload, short-circuit and undervoltage protection roles in a circuit and power supply equipment as a low-voltage apparatus. The low-voltage AC vacuum circuit breaker comprises an insulating framework, wherein a vacuum switch tube is arranged in the insulating framework and comprises a vacuum tube fixed contact and a vacuum tube moving contact; the vacuum tube moving contact is connected with a turning wall; the turning wall is connected with a closing rotating shaft; the closing rotating shaft is connected with a closing plate; the closing plate is connected with a breaking spring; the vacuum tube moving contact is driven to move; an undervoltage release coil is arranged outside the insulating framework and is connected with a shunt excitation coil; an half shaft is arranged at the end of the shunt excitation coil and is connected with an half shaft tension spring; the half shaft tension spring is connected with a breaking line; and a gap is formed in the half shaft.

The mentioned low-voltage boards of the state of the art comprise fuse blocks having the function of protecting the electrical line against overloads and short-circuits, and break switches for isolating the low-voltage board from the power supply and/or the function of grounding the set of distribution busbars. The need to have both elements so as to perform said functions involves the drawback that the low-voltage board acquires dimensions such that in some locations there is not enough space for installing it.

Furthermore, in order for the low-voltage board to have a certain degree of protection against accidental contacts with live parts and to be a safe board for operations, additional measures must be applied, such as the placement of intermediate barriers, doors with locks, etc., to prevent direct access to the line connection busbars, to the breaking switch, and to the input strips.

### Description of the Invention

The switching and protection means object of the invention seeks to resolve each and every one of the aforementioned problems. Said switching and protection means is for being applied in low-voltage boards comprising at least one set of line connection busbars, a distribution busbar, an auxiliary line connection, auxiliary and measurement circuit outputs, etc.

The switching and protection means has a first function of protection against electrical faults due to overloads and short-circuits, as well as a second function of isolating the low-voltage board from the power supply and/or the function of grounding the set of distribution busbars. In this way, both functions are thereby allowed to be performed by means of a single element, i.e., the switching and protection means of the invention, instead of using a separate element for carrying out each one of them, thereby obtaining a more compact low-voltage board which prevents the mentioned space problems for installation.

In this sense, the switching and protection means comprises at least one switch with at least two positions (connected, cut off and/or disconnected), provided with a fixed contact and a moveable contact. This switching and protection means can comprise a vacuum circuit breaker with two positions that can be switched both locally and remotely and have the capacity to cut off electric currents due to overloads and short-circuits, as well as to open rated or load currents, as established in standard IEC 60947-2:2006, PART 2: CIRCUIT BREAKERS. This vacuum circuit breaker also has automatic reclosing capacity for eliminating transient faults, and it will be programmed depending on the time and type of fault and performed from the control unit of the transformer substation. The switching and protection means also comprises at least one actuation means, such as for example an actuator with two positions, provided with a first functional position and a second functional position, such that depending on the position of the actuator the switch will perform the function of connecting or the function of cutting off and/or disconnecting, thereby carrying out the functions of protecting against electrical faults due to overloads and short-circuits, and of isolating the low-voltage board from the power supply.

The switching and protection means can also comprise:
- at least one local activation means for opening/closing the vacuum circuit breaker, such as a keypad, for example,
- a first visual indicator means for indicating the open or closed position of the vacuum circuit breaker, thereby enabling the viewing of the state of said switch locally,
- a second indicator means for indicating the open or closed position of the vacuum circuit breaker based on potential-free contact, thereby enabling the viewing of the state of said switch remotely,
- a third visual indicator means indicating the connected or disconnected position of the switching and protection means, thereby enabling the viewing of the state of the switching and protection means locally,
- a fourth indicator means indicating the connected or disconnected position of the switching and protection means based on potential-free contact, thereby enabling the viewing of the state of the switching and protection means remotely,
- a manual trip means detectable in its switching position by detector means based on potential-free contact, where the manual trip means can be, for example, a lever detectable in its switching position, i.e., when inserted for switching,
- a first interlock which impedes the connection or disconnection of the switching and protection means with respect to the vacuum circuit breaker in the closed position,
- a grounding means which allows grounding the line suspended from said switching and protection means,
- a second interlock which impedes the connection or grounding of the switching and protection means in its disconnected position, and
- power and control cables associated with a control box of the low-voltage board.

The possibility of the switch being able to have three positions (connected, cut off and/or disconnected, and grounded), such as, for example, a vacuum circuit breaker with three positions which can be switched both locally and remotely and has the capacity to cut off electric currents due to overloads and short-circuits, as well as to open rated or load currents, as established in standard IEC 60947-2:2006, PART 2: CIRCUIT BREAKERS, has been contemplated. Likewise, this vacuum circuit breaker has automatic reclosing capacity for the elimination of transient faults, and it will be programmed depending on the time and type of fault and performed from the control unit of the transformer substation. In this case, the switching and protection means comprises selector means with at least two positions, which allow selecting a first position or a second position manually or in a power-driven manner, this selector means being associated with actuation means comprising an actuator provided with a first functional position and a second functional position.

By keeping the selector means in its first position, the movement of the actuator from its first functional position to its second functional position moves the moveable contact of the switch to the connected switching position. By starting from this connected position and keeping the selector means in its first position, moving the actuator to its first functional position, the moveable contact of the switch moves to the cut off and/or disconnected position, and therefore said moveable contact transitions to the switching cut off and/or disconnected position.

On the other hand, by keeping the selector means in its second position, the movement of the actuator from its first functional position to its second functional position moves the moveable contact of the switch to the switching grounded position. Likewise, by starting from this grounded position, keeping the selector means in its second position and moving the actuator to its first functional position, the moveable contact of the switch moves and transitions to the switching cut off and/or disconnected position.

As in the case of the switching and protection means with the aforementioned vacuum circuit breaker with two positions, the switching and protection means with a vacuum circuit breaker with three positions can also comprise:
- at least one local activation means for opening/closing the vacuum circuit breaker, such as a keypad, for example,
- a first visual indicator means for indicating the open or closed position of the vacuum circuit breaker, thereby enabling the viewing of the state of said switch locally,
- a second indicator means for indicating the open or closed position of the vacuum circuit breaker based on potential-free contact, thereby enabling the viewing of the state of said switch remotely,
- a third visual indicator means indicating the connected or disconnected position of the switching and protection means, thereby enabling the viewing of the state of the switching and protection means locally,
- a fourth indicator means indicating the connected or disconnected position of the switching and protection means based on potential-free contact, thereby enabling the viewing of the state of the switching and protection means remotely,
- a manual trip means detectable in its switching position by detector means based on potential-free contact, where the manual trip means can be, for example, a lever detectable in its switching position, i.e., when inserted for switching,
- a first interlock which impedes the connection or disconnection of the switching and protection means with respect to the vacuum circuit breaker in the closed position,
- a grounding means which allows grounding the line suspended from said switching and protection means,
- a second interlock which impedes the connection or grounding of the switching and protection means in its disconnected position, and
- power and control cables associated with a control box of the low-voltage board.

The switch of the switching and protection means object of the invention, such as a vacuum circuit breaker, for example, can replace the fuses used in the state of the art and therefore the need to replace the melted fuses every time there is an electrical fault due to an overload or short-circuit is prevented. Furthermore, due to the possibility that the switching and protection means of the invention can be switched remotely, the need to send a skilled operator to the installation where the low-voltage board is located to restore service after clearing an electrical fault is avoided. The switching and protection means comprises an anti-pump interlock, such that if the opening signal and closing signal of the vacuum circuit breaker are present at the same time, opening will prevail, with the closing being blocked until the switching orders disappear.

Likewise, the switching and protection means allows leaving the low-voltage board out of service in an easy, rapid, and safe manner for cases where maintenance, repair, replacement, or expansion tasks must be performed on the low-voltage board, or when it is necessary to connect an external auxiliary power source because of a deficit in the supply of energy, a load transfer, the need to replace the medium-voltage/low-voltage transformer, or the need to perform maintenance or repair tasks in the installations in which the low-voltage board is located.

The fuse blocks of a field-installed low-voltage board can be replaced entirely or partially with switching and protection means like those of the present invention. This re-adaptation of the blocks is possible because the new switching and protection means comprises dimensions and technical characteristics such that it can be installed in the same gap as a fuse block without having to modify any part of the low-voltage board.As another embodiment of the invention, it has been contemplated that the switching and protection means may comprise, in addition to the vacuum circuit breaker with at least two positions, a protection element protecting against overloads and short-circuit currents installed in series, such as a fuse, for example, such that in this case the switch is a vacuum circuit breaker having fewer features, capable of cutting off currents to a certain level and allowing cutting off currents higher than the protection element.

The switching and protection means comprises a casing which can incorporate therein the vacuum circuit breaker with two or three positions, the actuation means, the selector means when it is a vacuum circuit breaker with three positions, and the protection element, such as a fuse, for example. Likewise, it comprises at least one input strip and one output strip partially incorporated in the casing, where said strips can be electrically connected with the distribution busbar and with the branch conductors outside the casing. The connection between the input strips and the distribution busbar and the connection between the output strips and the branch conductors can be of the plug-in type, screw-in type, or of any other type. The input strip is attached to the fixed contact of the switch and the output strip is attached to the moveable contact of the same switch by means of an elastic conductor. For the case where the casing incorporates therein a protection element in series with the vacuum circuit breaker, said casing comprises an access which facilitates replacing the protection element.

The switching and protection means further comprises a structure which can take in at least one casing provided with at least said actuation means and said switch, where each casing of the switching and protection means can be coupled in said structure through mechanical fixing flanges incorporated both in the structure and in the casing. This casing can comprise a grip facilitating its manual or automated coupling/uncoupling with respect to the structure, where this coupling/uncoupling can be carried out with the low-voltage board in service, such that the uncoupling of the casing with respect to the structure entails leaving the switching and protection means in its disconnected switching position. The structure comprises mechanical protection which prevents contact with the distribution busbar and with the branch conductors once the casing is uncoupled with respect to said structure, thus providing protection for people against the access of dangerous parts and protection for materials against the harmful effects of mechanical impacts. Finally, it has been envisaged that the casing of the switching and protection means can comprise a plug-in connection through which the actuator can be powered when said casing is coupled in the structure.

### Description of the Drawings

To complement the description that is being made and for the purpose of helping to better understand the features the invention according to a preferred practical embodiment thereof, a set of drawings is attached as an integral part of said description in which the following is depicted in an illustrative and non-limiting manner:
Figure 1 shows a schematic diagram of the switching and protection means according to a first preferred embodiment, wherein the switch has two positions, and wherein the movement of the actuator to its second position moves the moveable contact of the switch to the connected switching position.
Figure 2 shows a schematic diagram of the switching and protection means according to the embodiment of Figure 1, wherein the switch has two positions, and wherein the movement of the actuator to its first position moves the moveable contact of the switch to the switching cut off and/or disconnected position.
Figure 3 shows a schematic diagram of the switching and protection means of the invention according to a second preferred embodiment, wherein the switch is in the grounded position.
Figure 4 shows a schematic diagram of the switching and protection means of Figure 3, wherein the switch is in the cut off and/or disconnected position after having started from the grounded position.
Figure 5 shows a schematic diagram of the switching and protection means of Figure 3, wherein the switch is in the connected position.
Figure 6 shows a schematic diagram of the switching and protection means of Figure 3, wherein the switch is in the cut off and/or disconnected position after having started from the connected position.
Figure 7 shows a perspective view of the casing comprising the switching and protection means and the connection thereof with the distribution busbar and the branch conductors.
Figure 8 shows a perspective view of a set of casings of the switching and protection means assembled on the structure in turn assembled on the low-voltage board.
Figure 9 shows a perspective view of the structure where the casings of the switching and protection means are assembled.
Figure 10 shows a schematic diagram of the switching and protection means of the invention according to a third preferred embodiment, wherein the switching and protection means comprises a circuit breaker in series with a protection element.
Figure 11 shows a perspective view of the casing comprising the switching and protection means and the connection thereof with the distribution busbar and the branch conductors according to the first and second preferred embodiments.
Figure 12 shows a perspective view of the casing comprising the switching and protection means and the connection thereof with the distribution busbar and the branch conductors according to the third preferred embodiment.

### Preferred Embodiment of the Invention

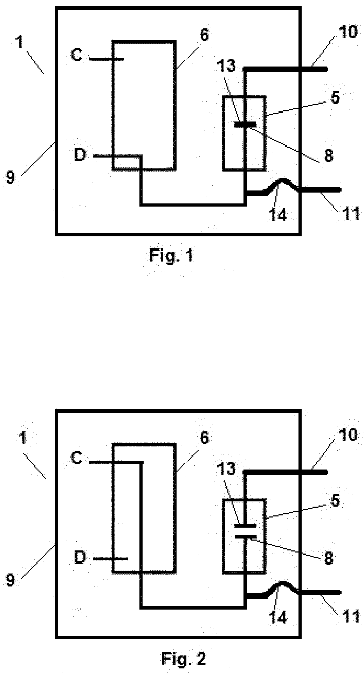

The switching and protection means (1) of Figures 1 and 2 corresponds to a first embodiment of the invention, wherein said switching and protection means (1) comprises at least one circuit breaker (5) with two positions, connected - cut off and/or disconnected, such as a vacuum circuit breaker, for example. Likewise, the switching and protection means (1) comprises at least one actuation means (6) comprising an actuator with two positions, provided with a first functional position (C) and a second functional position (D). This actuation means (6) is associated with the circuit breaker (5) such that the movement of the actuator from its first functional position (C) to its second functional position (D) or vice versa causes the movement of a moveable contact (8) of the circuit breaker (5), leading said moveable contact (8) to be connected with a fixed contact (13) of the switch (5) (connected position of the circuit breaker (5)) or leading said moveable contact (8) to separate from the fixed contact (13) (cut off and/or disconnected position of the circuit breaker (5)). In this sense, Figure 1 corresponds to the connected position of the circuit breaker (5) and Figure 2 corresponds to the cut off and/or disconnected position of the circuit breaker (5). These switching operations of the circuit breaker (5) can be ordered and executed both locally and remotely.

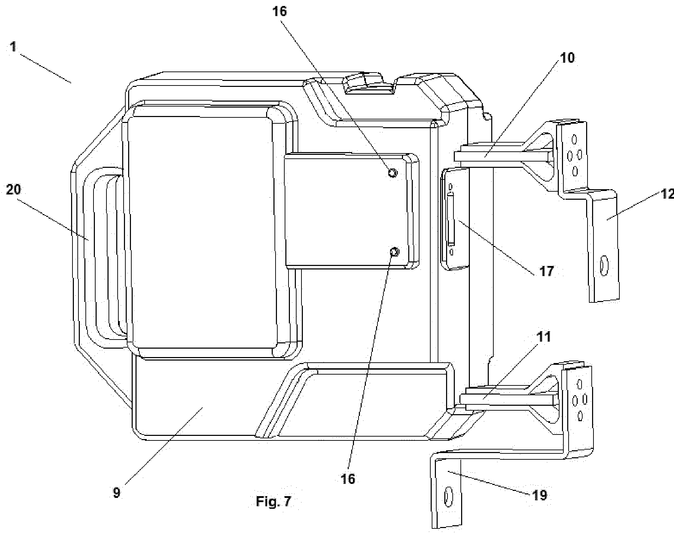

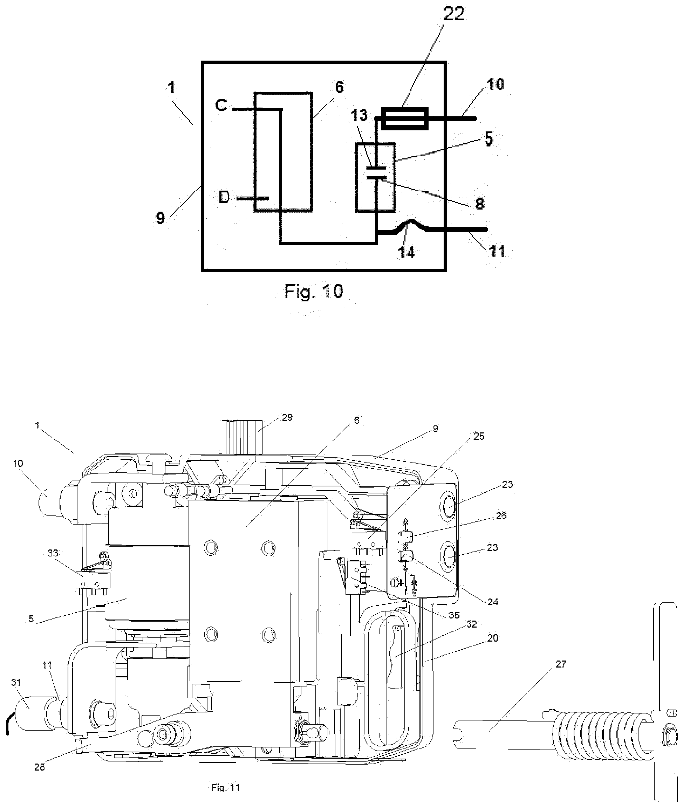

As shown in Figures 1, 2, 7, 8, 9 and 11, the switching and protection means (1) comprises a casing (9) in which the actuation means (6) and the circuit breaker (5) are incorporated. Likewise, the switching and protection means (1) comprises at least one input strip (10) and one output strip (11) partially incorporated in the casing (9), where said strips (10, 11) can be electrically connected with a distribution busbar (12) and with branch conductors (19), respectively, outside the casing (9). The connection between the input strips (10) and the distribution busbar (12) and the connection between the output strips (11) and the branch conductors (19) can be of the type plug-in as shown in Figures 7 and 11, of the screw-in type, or of any other type. The input strip (10) is attached to the fixed contact (13) of the circuit breaker (5) and the output strip (11) is attached to the moveable contact (8) of the same circuit breaker (5) by means of an elastic conductor (14).

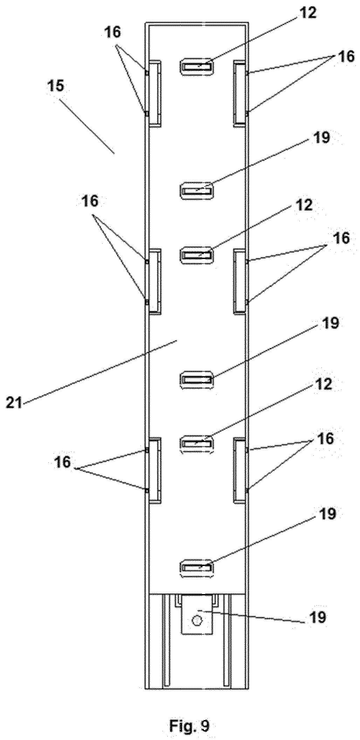

On the other hand, in this first embodiment of the invention it has also been envisaged that the switching and protection means (1) may comprise a structure (15), which can take in at least one casing (9) provided with at least said actuation means (6) and said circuit breaker (5), each casing (9) of the switching and protection means (1) being coupled in said structure (15) through mechanical fixing flanges (16) in both the structure (15) and the casing (9), as shown in Figures 7 and 9.

Furthermore, the casing (9) can comprise a grip (20) facilitating its manual or automated coupling/uncoupling with respect to the structure (15), as shown in Figures 7, 8, and 11, where this coupling/uncoupling can be carried out with the low-voltage board in service, such that the uncoupling of the casing (9) with respect to the structure (15) entails leaving the switching and protection means (1) in its disconnected switching position. The structure (15) comprises a mechanical protection (21) which prevents contact with the distribution busbar (12) and with the branch conductors (19) once the casing (9) is uncoupled with respect to said structure (15), as shown in Figure 9. Finally, it has been envisaged that the casing (9) of the switching and protection means (1) may comprise a plug-in connection (17) through which the actuation means (6) can be powered when said casing (9) is coupled in the structure (15), as shown in Figure 7.

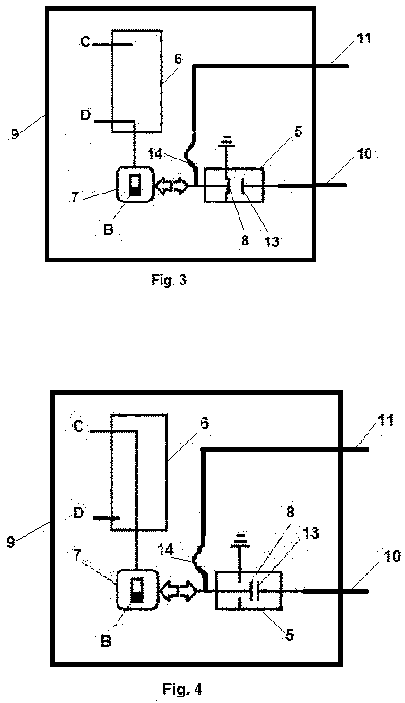

In a second embodiment of the invention, as shown in Figures 3, 4, 5, and 6, the switching and protection means (1) comprises at least one circuit breaker (5) with three positions (connected, cut off and/or disconnected, and grounded), such as, for example, a vacuum circuit breaker with three positions which can be switched both locally and remotely. The switching and protection means (1) comprises selector means (7) with at least two positions, which allows selecting a first position (A) or a second position (B) manually or in a power-driven manner, this selector means (7) being associated with actuation means (6) which can comprise, for example, an actuator provided with a first functional position (C) and a second functional position (D).

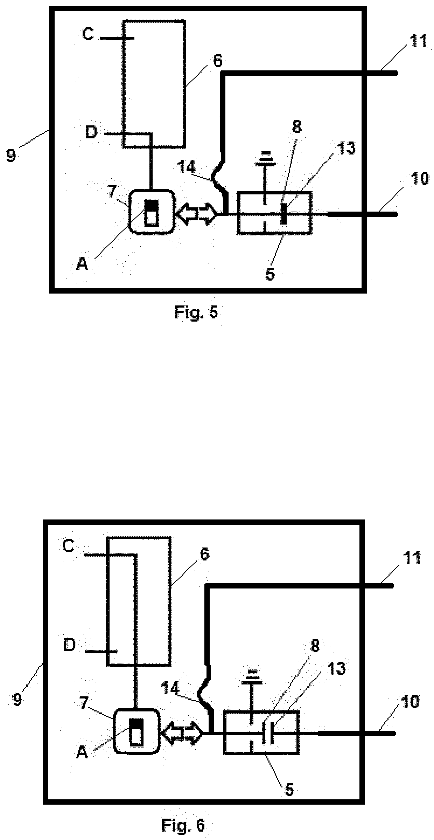

By keeping the selector means (7) in its first position (A), the movement of the actuation means (6) from its first functional position (C) to its second functional position (D) moves a moveable contact (8) of the circuit breaker (5) to the connected switching position, as shown in Figure 5. By starting from this connected position and keeping the selector means (7) in its first position (A), moving the actuation means (6) to its first functional position (C), the moveable contact (8) of the circuit breaker (5) moves to the cut off and/or disconnected position, and therefore said moveable contact (8) transitions to the switching cut off and/or disconnected position, as shown in Figure 6. On the other hand, by keeping the selector means (7) in its second position (B), the movement of the actuation means (6) from its first functional position (C) to its second functional position (D) moves the moveable contact (8) of the circuit breaker (5) to the switching grounded position, as shown in Figure 3. Likewise, by starting from this grounded position, keeping the selector means (7) in its second position (B) and moving the actuation means (6) to its first functional position (C), the moveable contact (8) of the circuit breaker (5) moves and transitions to the switching cut off and/or disconnected position, as shown in Figure 4.

As in the first embodiment, in this second embodiment the switching and protection means (1) also comprises a casing (9) in which the circuit breaker (5), the actuation means (6), and the selector means (7) are incorporated, as shown in Figures 3-8 and 11. Likewise, the switching and protection means (1) comprises at least one input strip (10) and one output strip (11) partially incorporated in the casing (9), where said strips (10, 11) can be electrically connected with the distribution busbar (12) and with the branch conductors (19), respectively, outside the casing (9). The connection between the input strips (10) and the distribution busbar (12) and the connection between the output strips (11) and the branch conductors (19) can be of the type plug-in as shown in Figures 7 and 11, screw-in type, or of any other type. The input strip (10) is attached to the fixed contact (13) of the circuit breaker (5) and the output strip (11) is attached to the moveable contact (8) of the same circuit breaker (5) by means of an elastic conductor (14).

In this second embodiment, as can be observed in Figures 7-9, the switching and protection means (1) can comprise a structure (15) which can take in at least one casing (9) provided with at least said actuation means (6), selector means (7), and circuit breaker (5), where each casing (9) of the switching and protection means (1) can be coupled in said structure (15) through mechanical fixing flanges (16) in both the structure (15) and the casing (9). Furthermore, the casing (9) can comprise a grip (20) facilitating its manual or automated coupling/uncoupling with respect to the structure (15), where this coupling/uncoupling can be carried out with the low-voltage board in service, such that the uncoupling of the casing (9) with respect to the structure (15) entails leaving the switching and protection means (1) in its disconnected switching position.

The structure (15) can comprise a mechanical protection (21) which prevents contact with the distribution busbar (12) and with the branch conductors (19) once the casing (9) is uncoupled with respect to said structure (15), as shown in Figure 9. Finally, it has been envisaged that the casing (9) of the switching and protection means (1) may comprise a plug-in connection (17) through which the actuator (6) can be powered when said casing (9) is coupled in the structure (15), as shown in Figure 7.

According to a third possible embodiment of the invention, as shown in Figure 10, in addition to the vacuum circuit breaker (5) the switching and protection means (1) can comprise a protection element (22), such as a fuse, for example, protecting against overloads and short-circuit currents, installed in series with said vacuum circuit breaker (5), such that in this case the circuit breaker (5) is a vacuum circuit breaker having fewer features, capable of cutting off currents to a certain level and allowing cutting off currents higher than the protection element (22).

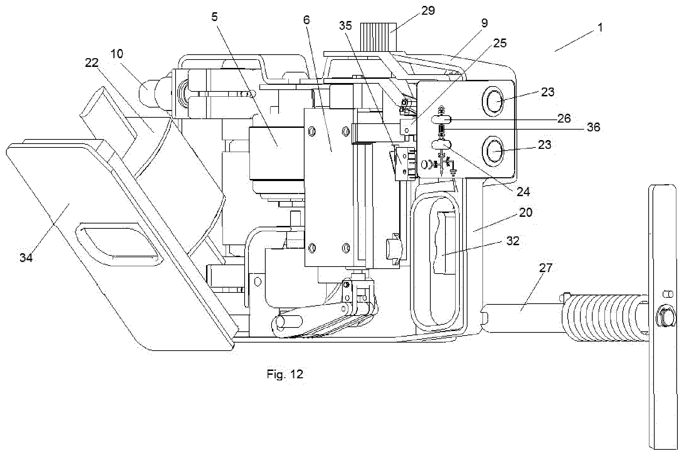

In this third embodiment, as in the first and second embodiments, the switching and protection means (1) comprises also a casing (9) in which the circuit breaker (5), the actuation means (6), and the protection element (22) are incorporated, as shown in Figure 12. Likewise, the switching and protection means (1) comprises at least one input strip (10) and one output strip (11) partially incorporated in the casing (9), where said strips (10, 11) can be electrically connected with the distribution busbar (12) and with the branch conductors (19), respectively, outside the casing (9). The connection between the input strips (10) and the distribution busbar (12) and the connection between the output strips (11) and the branch conductors (19) can be of the plug-in type as shown in Figure 12, screw-in type, or of any other type. The input strip (10) is attached to the fixed contact (13) of the circuit breaker (5) and the output strip (11) is attached to the moveable contact (8) of the same circuit breaker (5) by means of an elastic conductor (14). In this case, the casing (9) comprises a access (34) which allows replacing the protection element (22) when needed, as shown in Figure 12, where this access (34) can be a hinged lid, for example.

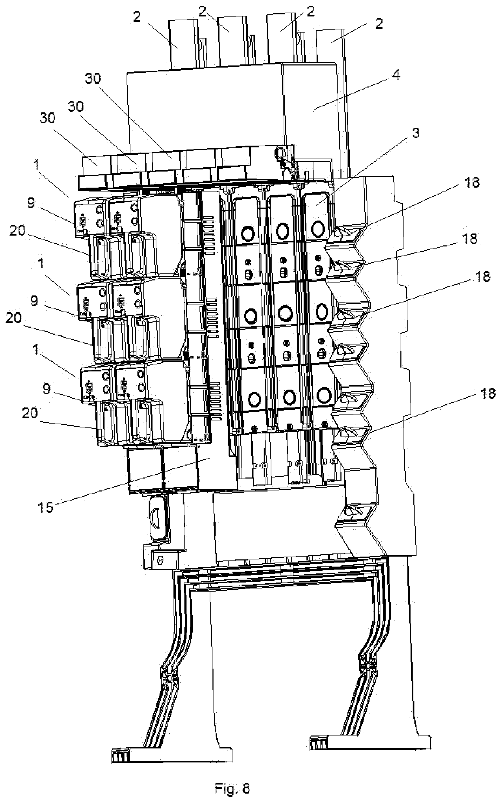

In this third embodiment, as can be observed in Figures 8 and 9, the switching and protection means (1) can comprise a structure (15) which can take in at least one casing (9) provided with at least said actuation means (6), the circuit breaker (5), and the protection element (22), where each casing (9) of the switching and protection means (1) can be coupled in said structure (15) through mechanical fixing flanges (16) in both the structure (15) and the casing (9).

Furthermore, the casing (9) can comprise a grip (20) facilitating its manual or automated coupling/uncoupling with respect to the structure (15), where this coupling/uncoupling can be carried out with the low-voltage board in service, such that the uncoupling of the casing (9) with respect to the structure (15) entails leaving the switching and protection means (1) in its disconnected switching position. The structure (15) can comprise a mechanical protection (21) which prevents contact with the distribution busbar (12) and with the branch conductors (19) once the casing (9) is uncoupled with respect to said structure (15), as shown in Figure 9. Finally, it has been envisaged that the casing (9) of the switching and protection means (1) may comprise a plug-in connection (17) through which the actuation means (6) can be powered when said casing (9) is coupled in the structure (15), as shown in Figure 12.

Finally, as shown in Figures 11 and 12, the switching and protection means (1) according to any of the first, second, or third embodiments can comprise:
- at least one local activation means (23) for opening/closing the vacuum circuit breaker (5), such as a keypad, for example,
- a first visual indicator means (24) for indicating the open or closed position of the vacuum circuit breaker (5), thereby enabling the viewing of the state of said circuit breaker (5) locally,
- a second indicator means (25) for indicating the open or closed position of the vacuum circuit breaker (5) based on potential-free contact, thereby enabling the viewing of the state of said circuit breaker (5) remotely,
- a third visual indicator means (26) indicating the connected or disconnected position of the switching and protection means (1), thereby enabling the viewing of the state of the switching and protection means (1) locally,
- a fourth indicator means (33) indicating the connected or disconnected position of the switching and protection means (1) based on potential-free contact, thereby enabling the viewing of the state of the switching and protection means (1) remotely,
- a manual trip means (27) detectable in its switching position by detector means (35) based on potential-free contact, where the manual trip means (27) can be, for example, a lever detectable in its switching position, i.e., when inserted for switching,
- a first interlock (28) which impedes the connection or disconnection of the switching and protection means (1) with respect to the vacuum circuit breaker (5) in the closed position,
- grounding means (31) which allows grounding the line suspended from said switching and protection means (1),
- a second interlock (32) which impedes the connection or grounding of the switching and protection means (1) in its disconnected position,
- power and control cables (29) associated with a control box (30) of the low-voltage board, and
- a fifth indicator means (36) for indicating the state of the protection element (22) for the case where the switching and protection means (1) comprises a protection element (22) in series with the vacuum circuit breaker (5).

## Claims

1. Switching and protection means (1) for being applied in a low-voltage board with a set of line connection busbars (2) that connects the conductors coming from the medium-voltage/low-voltage transformer with a distribution busbar (12) of said low-voltage board, where said low-voltage board is in charge of, once the energy has been transformed to the low-voltage range, distributing the electric energy to different consumers, comprising the switching and protection means (1):
- a circuit breaker (5) with at least two positions; wherein the circuit breaker (5) is a vacuum circuit breaker which can be switched both locally and remotely, with the capacity to cut off currents due to overloads, short-circuits and rated or load currents;
- actuation means (6);
- a casing (9) in which the circuit breaker (5) and the actuation means (6) are housed; **characterized by**:
- at least one input strip (10) and one output strip (11) partially incorporated in the casing (9), where said strips (10, 11) can be electrically connected with the distribution busbar (12) and with branch conductors (19) outside the casing (9); being the switching and protection means (1), wherein the vacuum circuit breaker (5) has automatic reclosing capacity for eliminating transient faults, programmed depending on the time and type of fault and performed from the control unit of the transformer substation.

2. Switching and protection means (1) according to claim 1, **characterized in that** it comprises at least one local activation means (23) for opening/closing the circuit breaker (5), assembled in the casing (9) and accessible from the outside of said casing (9).

3. Switching and protection means (1) according to claim 2, **characterized in that** it comprises:
- a first visual indicator means (24) for indicating the open or closed position of the circuit breaker (5);
- a second indicator means (25) for indicating the open or closed position of the circuit breaker (5) based on potential-free contact;
- a third visual indicator means (26) indicating the connected or disconnected position of the switching and protection means (1); and
- a fourth indicator means (33) indicating the connected or disconnected position of the switching and protection means (1) based on potential-free contact.

4. Switching and protection means (1) according to any of the preceding claims, **characterized in that** it comprises a manual trip means (27) detectable in its switching position by detector means (35) based on potential-free contact.

5. Switching and protection means (1) according to any of the preceding claims, **characterized in that** it comprises a first interlock (28) which impedes the connection or disconnection of the switching and protection means (1) with respect to the circuit breaker (5) in the closed position.

6. Switching and protection means (1) according to any of the preceding claims, **characterized in that** it comprises grounding means (31).

7. Switching and protection means (1) according to any of the preceding claims, **characterized in that** it comprises a second interlock (32) which impedes the connection or grounding of the switching and protection means (1) in its disconnected position.

8. Switching and protection means (1) according to any of the preceding claims, **characterized in that** it comprises power and control cables (29) associated with a control box (30) of a low-voltage board.

9. Switching and protection means (1) according to any of the preceding claims, **characterized in that** the circuit breaker (5) is a vacuum circuit breaker with three positions, connected, cut off and/or disconnected, and grounded.

10. Switching and protection means (1) according to claim 9, **characterized in that** it comprises selector means (7) with at least two positions (A, B), where a first position A or a second position B can be selected manually or in a power-driven manner.

11. Switching and protection means (1) according to claim 10, **characterized in that** the selector means (7) is associated with the actuation means (6), which in turn comprises an actuator provided with a first functional position C and a second functional position D.

12. Switching and protection means (1) according to claim 11, **characterized in that** the actuation means (6), the selector means (7), and the circuit breaker (5) are housed inside the casing (9).

13. Switching and protection means (1) according to claim 1, **characterized in that** the electrical connection between the input strip (10) and the distribution busbar (12) and the electrical connection between the output strip (11) and the branch conductors (19) are of the plug-in or screw-in type.

14. Switching and protection means (1) according to claim 13, **characterized in that** the input strip (10) is attached to a fixed contact (13) of the circuit breaker (5) and the output strip (11) is attached to the moveable contact (8) by means of an elastic conductor (14), and wherein the casing (9) comprises a plug-in connection (17) for powering the actuation means (6).

15. Switching and protection means (1) according to claim 14, **characterized in that** the casing (9) comprises at least one coupling/uncoupling grip (20), the uncoupling of the casing (9) corresponding with the disconnected switching position of the switching and protection means (1).

16. Switching and protection means (1) according to any of the preceding claims, **characterized in that** it comprises a protection element (22) protecting against overloads and short-circuit currents, wherein the protection element (22) is connected in series with the vacuum circuit breaker (5).

17. Switching and protection means (1) according to claim 16, **characterized in that** it comprises a fifth indicator means (36) for indicating the state of the protection element (22).

18. Switching and protection means (1) according to claim 17, **characterized in that** the circuit breaker (5), the actuation means (6), and the protection element (22) are housed inside the casing (9), which additionally comprises an access (34) which allows replacing the protection element (22).

19. Low-voltage board comprising at least one switching and protection means (1) as described in any of the preceding claims, further comprising at least one set of line connection busbars (2), a distribution busbar (12), at least one measurement means (3), at least one auxiliary line connection (18), and at least one auxiliary circuit output (4), **characterized in that** it further comprises a structure (15) on which at least one switching and protection means (1) are installed, wherein the structure (15) further comprises:
- flanges (16) for the mechanical fixing to corresponding flanges (16) located in the switching and protection means (1), and
- a mechanical protection (21) which prevents contact with the distribution busbar (12) and with the branch conductors (19) once the casing (9) is uncoupled from said structure (15).

## Patentansprüche

1. Schalt- und Schutzmittel (1) zur Anwendung in einer Niederspannungsanlage mit einem Satz von Leitungsverbindungssammelschienen (2), der die vom Mittelspannungs-/Niederspannungstransformator kommenden Leiter mit einer Verteilungssammelschiene (12) der Niederspannungsanlage verbindet, wobei die Niederspannungsanlage dafür zuständig ist, nachdem die Energie in den Niederspannungsbereich transformiert wurde, die elektrische Energie an verschiedene Verbraucher zu verteilen, umfassend die Schalt- und Schutzmittel (1):
- einen Stromunterbrecher (5) mit mindestens zwei Positionen; wobei der Stromunterbrecher (5) ein Vakuumstromunterbrecher ist, der sowohl lokal als auch ferngeschaltet werden kann, mit der Fähigkeit, Ströme aufgrund von Überlastungen, Kurzschlüssen und Nenn- oder Lastströmen abzuschalten;
- Betätigungsmittel (6);
- ein Gehäuse (9), in dem der Stromunterbrecher (5) und die Betätigungsmittel (6) untergebracht sind; **gekennzeichnet durch**:
- mindestens einen Eingangsstreifen (10) und einen Ausgangsstreifen (11), die teilweise in das Gehäuse (9) integriert sind, wobei die Streifen (10, 11) elektrisch mit der Verteilungssammelschiene (12) und mit Abzweigleitern (19) außerhalb des Gehäuses (9) verbunden werden können;
wobei es sich um die Schalt- und Schutzmittel (1) handelt, wobei der Vakuumstromunterbrecher (5) eine automatische Wiedereinschaltfähigkeit zum Beseitigen von transienten Fehlern aufweist, die in Abhängigkeit von der Zeit und Art des Fehlers programmiert und von der Steuereinheit der Transformatorunterstation ausgeführt ist.

2. Schalt- und Schutzmittel (1) nach Anspruch 1, **dadurch gekennzeichnet, dass** es mindestens ein lokales Aktivierungsmittel (23) zum Öffnen/Schließen des Stromunterbrechers (5) umfasst, das in dem Gehäuse (9) angebracht und von außerhalb des Gehäuses (9) zugänglich ist.

3. Schalt- und Schutzmittel (1) nach Anspruch 2, **dadurch gekennzeichnet, dass** es umfasst:
- ein erstes visuelles Anzeigemittel (24) zum Anzeigen der offenen oder geschlossenen Position des Stromunterbrechers (5);
- ein zweites Anzeigemittel (25) zum Anzeigen der offenen oder geschlossenen Position des Stromunterbrechers (5) basierend auf potentialfreiem Kontakt;
- ein drittes visuelles Anzeigemittel (26), das die verbundene oder getrennte Position des Schalt- und Schutzmittel (1) anzeigt; und
- ein viertes Anzeigemittel (33), das die verbundene oder getrennte Position des Schalt- und Schutzmittel (1) basierend auf potentialfreiem Kontakt anzeigt.

4. Schalt- und Schutzmittel (1) nach einem der voranstehenden Ansprüche, **dadurch gekennzeichnet, dass** es ein manuelles Auslösemittel (27) umfasst, das in der Schaltposition durch Detektormittel (35) basierend auf potentialfreiem Kontakt detektierbar ist.

5. Schalt- und Schutzmittel (1) nach einem der voranstehenden Ansprüche, **dadurch gekennzeichnet, dass** es eine erste Verriegelung (28) umfasst, die das Verbinden oder Trennen des Schalt- und Schutzmittels (1) in Bezug auf den Stromunterbrecher (5) in der geschlossenen Position verhindert.

6. Schalt- und Schutzmittel (1) nach einem der voranstehenden Ansprüche, **dadurch gekennzeichnet, dass** es Erdungsmittel (31) umfasst.

7. Schalt- und Schutzmittel (1) nach einem der voranstehenden Ansprüche, **dadurch gekennzeichnet, dass** es eine zweite Verriegelung (32) umfasst, die das Verbinden oder Erden des Schalt- und Schutzmittels (1) in seiner getrennten Position verhindert.

8. Schalt- und Schutzmittel (1) nach einem der voranstehenden Ansprüche, **dadurch gekennzeichnet, dass** es Strom- und Steuerkabel (29) umfasst, die einem Steuerkasten (30) einer Niederspannungsanlage zugeordnet sind.

9. Schalt- und Schutzmittel (1) nach einem der voranstehenden Ansprüche, **dadurch gekennzeichnet, dass** der Stromunterbrecher (5) ein Vakuumstromunterbrecher mit drei Positionen ist, verbunden, abgeschaltet und/oder getrennt, und geerdet.

10. Schalt- und Schutzmittel (1) nach Anspruch 9, **dadurch gekennzeichnet, dass** es Auswahlmittel (7) mit mindestens zwei Positionen (A, B) umfasst, wobei eine erste Position A oder eine zweite Position B manuell oder auf eine stromgetriebene Weise ausgewählt werden kann.

11. Schalt- und Schutzmittel (1) nach Anspruch 10, **dadurch gekennzeichnet, dass** das Auswahlmittel (7) mit dem Betätigungsmittel (6) verbunden ist, das wiederum einen Aktuator umfasst, der mit einer ersten Funktionsposition C und einer zweiten Funktionsposition D versehen ist.

12. Schalt- und Schutzmittel (1) nach Anspruch 11, **dadurch gekennzeichnet, dass** das Betätigungsmittel (6), das Auswahlmittel (7) und der Stromunterbrecher (5) innerhalb des Gehäuses (9) untergebracht sind.

13. Schalt- und Schutzmittel (1) nach Anspruch 1, **dadurch gekennzeichnet, dass** die elektrische Verbindung zwischen dem Eingangsstreifen (10) und der Verteilungssammelschiene (12) und die elektrische Verbindung zwischen dem Ausgangsstreifen (11) und den Abzweigleitern (19) vom Einsteck- oder Einschraubtyp sind.

14. Schalt- und Schutzmittel (1) nach Anspruch 13, **dadurch gekennzeichnet, dass** der Eingangsstreifen (10) an einem festen Kontakt (13) des Stromunterbrechers (5) befestigt ist und der Ausgangsstreifen (11) an dem bewegbaren Kontakt (8) mittels eines elastischen Leiters (14) befestigt ist, und wobei das Gehäuse (9) eine Steckverbindung (17) zur Stromversorgung des Betätigungsmittels (6) umfasst.

15. Schalt- und Schutzmittel (1) nach Anspruch 14, **dadurch gekennzeichnet, dass** das Gehäuse (9) mindestens einen Kopplungs-/Entkopplungsgriff (20) umfasst, wobei das Entkoppeln des Gehäuses (9) zur getrennten Schaltposition des Schalt- und Schutzmittels (1) korrespondiert.

16. Schalt- und Schutzmittel (1) nach einem der voranstehenden Ansprüche, **dadurch gekennzeichnet, dass** es ein Schutzelement (22) umfasst, das vor Überlastungen und Kurzschlussströmen schützt, wobei das Schutzelement (22) in Reihe mit dem Vakuumstromunterbrecher (5) verbunden ist.

17. Schalt- und Schutzmittel (1) nach Anspruch 16, **dadurch gekennzeichnet, dass** es ein fünftes Anzeigemittel (36) zum Anzeigen des Zustands des Schutzelements (22) umfasst.

18. Schalt- und Schutzmittel (1) nach Anspruch 17, **dadurch gekennzeichnet, dass** der Stromunterbrecher (5), das Betätigungsmittel (6) und das Schutzelement (22) innerhalb des Gehäuses (9) untergebracht sind, das zusätzlich einen Zugang (34) umfasst, der das Ersetzen des Schutzelements (22) ermöglicht.

19. Niederspannungsanlage, umfassend mindestens ein Schalt- und Schutzmittel (1) nach einem der voranstehenden Ansprüche, ferner umfassend mindestens einen Satz von Leitungsverbindungssammelschienen (2), eine Verteilungssammelschiene (12), mindestens ein Messmittel (3), mindestens eine Hilfsleitungsverbindung (18) und mindestens einen Hilfsschaltungsausgang (4), **dadurch gekennzeichnet, dass** sie ferner eine Struktur (15) umfasst, auf der mindestens ein Schalt- und Schutzmittel (1) installiert ist, wobei die Struktur (15) ferner umfasst:
- Flansche (16) zur mechanischen Befestigung an korrespondierenden Flanschen (16), die sich in dem Schalt- und Schutzmittel (1) befinden, und
- einen mechanischen Schutz (21), der den Kontakt mit der Verteilungssammelschiene (12) und mit den Abzweigleitern (19) verhindert, sobald das Gehäuse (9) von der Struktur (15) entkoppelt ist.

## Revendications

1. Moyen de commutation et de protection (1) destiné à être appliqué dans un tableau basse tension avec un ensemble de barres omnibus de connexion de ligne (2) qui connecte les conducteurs provenant du transformateur moyenne tension/basse tension à une barre omnibus de distribution (12) dudit tableau basse tension, où ledit tableau basse tension est responsable, une fois que l'énergie a été transformée vers la plage de la basse tension, de distribuer l'énergie électrique à différents consommateurs, comprenant le moyen de commutation et de protection (1) :
- un disjoncteur (5) doté d'au moins deux positions ; dans lequel le disjoncteur (5) est un disjoncteur à vide qui peut être commuté à la fois localement et à distance, doté de la capacité de couper des courants dus à des surcharges, des courts-circuits et des courants nominaux ou de charge ;
- un moyen d'actionnement (6) ;
- un boîtier (9) dans lequel le disjoncteur (5) et le moyen d'actionnement (6) sont logés ; **caractérisé par** :
- au moins une bande d'entrée (10) et une bande de sortie (11) partiellement incorporées dans le boîtier (9), où lesdites bandes (10, 11) peuvent être électriquement connectées avec la barre omnibus de distribution (12) et avec des conducteurs de dérivation (19) à l'extérieur du boîtier (9) ; étant le moyen de commutation et de protection (1), dans lequel
le disjoncteur (5) à vide possède une capacité de réenclenchement automatique pour l'élimination de défauts transitoires, programmée en fonction de la durée et du type de défaut et réalisée à partir de l'unité de commande du poste de transformation.

2. Moyen de commutation et de protection (1) selon la revendication 1, **caractérisé en ce qu'**il comprend au moins un moyen d'activation locale (23) pour l'ouverture/la fermeture du disjoncteur (5), assemblé dans le boîtier (9) et accessible depuis l'extérieur dudit boîtier (9).

3. Moyen de commutation et de protection (1) selon la revendication 2, **caractérisé en ce qu'**il comprend :
- un premier moyen indicateur visuel (24) pour l'indication de la position ouverte ou fermée du disjoncteur (5) ;
- un deuxième moyen indicateur (25) pour l'indication de la position ouverte ou fermée du disjoncteur (5) sur la base d'un contact sans potentiel ;
- un troisième moyen indicateur visuel (26) indiquant la position connectée ou déconnectée du moyen de commutation et de protection (1) ; et
- un quatrième moyen indicateur (33) indiquant la position connectée ou déconnectée du moyen de commutation et de protection (1) sur la base d'un contact sans potentiel.

4. Moyen de commutation et de protection (1) selon l'une quelconque des revendications précédentes, **caractérisé en ce qu'**il comprend un moyen de déclenchement manuel (27) détectable dans sa position de commutation par un moyen détecteur (35) sur la base d'un contact sans potentiel.

5. Moyen de commutation et de protection (1) selon l'une quelconque des revendications précédentes, **caractérisé en ce qu'**il comprend un premier verrou (28) qui entrave la connexion ou la déconnexion du moyen de commutation et de protection (1) par rapport au disjoncteur (5) dans la position fermée.

6. Moyen de commutation et de protection (1) selon l'une quelconque des revendications précédentes, **caractérisé en ce qu'**il comprend un moyen de mise à la terre (31).

7. Moyen de commutation et de protection (1) selon l'une quelconque des revendications précédentes, **caractérisé en ce qu'**il comprend un deuxième verrou (32) qui entrave la connexion ou la mise à la terre du moyen de commutation et de protection (1) dans sa position déconnectée.

8. Moyen de commutation et de protection (1) selon l'une quelconque des revendications précédentes, **caractérisé en ce qu'**il comprend des câbles d'alimentation et de commande (29) associés à un coffret de commande (30) d'un tableau basse tension.

9. Moyen de commutation et de protection (1) selon l'une quelconque des revendications précédentes, **caractérisé en ce que** le disjoncteur (5) est un disjoncteur à vide doté de trois positions, connectée, coupée et/ou déconnectée, et mis à la terre.

10. Moyen de commutation et de protection (1) selon la revendication 9, **caractérisé en ce qu'**il comprend un moyen sélecteur (7) doté d'au moins deux positions (A, B), où une première position A ou une deuxième position B peut être sélectionnée manuellement ou d'une manière motorisée.

11. Moyen de commutation et de protection (1) selon la revendication 10, **caractérisé en ce que** le moyen sélecteur (7) est associé au moyen d'actionnement (6), qui à son tour comprend un actionneur muni d'une première position fonctionnelle C et d'une deuxième position fonctionnelle D.

12. Moyen de commutation et de protection (1) selon la revendication 11, **caractérisé en ce que** le moyen d'actionnement (6), le moyen sélecteur (7) et le disjoncteur (5) sont logés à l'intérieur du boîtier (9).

13. Moyen de commutation et de protection (1) selon la revendication 1, **caractérisé en ce que** la connexion électrique entre la bande d'entrée (10) et la barre omnibus de distribution (12) et la connexion électrique entre la bande de sortie (11) et les conducteurs de dérivation (19) sont du type enfichable ou à vis.

14. Moyen de commutation et de protection (1) selon la revendication 13, **caractérisé en ce que** la bande d'entrée (10) est attachée à un contact fixe (13) du disjoncteur (5) et la bande de sortie (11) est attachée au contact mobile (8) au moyen d'un conducteur élastique (14), et dans lequel le boîtier (9) comprend une connexion enfichable (17) pour l'alimentation du moyen d'actionnement (6).

15. Moyen de commutation et de protection (1) selon la revendication 14, **caractérisé en ce que** le boîtier (9) comprend au moins une poignée de couplage/découplage (20), le découplage du boîtier (9) correspondant à la position de commutation déconnectée du moyen de commutation et de protection (1).

16. Moyen de commutation et de protection (1) selon l'une quelconque des revendications précédentes, **caractérisé en ce qu'**il comprend un élément de protection (22) qui protège contre les courants de surcharge et de court-circuit, dans lequel l'élément de protection (22) est connecté en série au disjoncteur (5) à vide.

17. Moyen de commutation et de protection (1) selon la revendication 16, **caractérisé en ce qu'**il comprend un cinquième moyen indicateur (36) pour l'indication de l'état de l'élément de protection (22).

18. Moyen de commutation et de protection (1) selon la revendication 17, **caractérisé en ce que** le disjoncteur (5), le moyen d'actionnement (6), et l'élément de protection (22) sont logés à l'intérieur du boîtier (9), qui comprend en outre un accès (34) qui permet le remplacement de l'élément de protection (22).

19. Tableau basse tension comprenant au moins un moyen de commutation et de protection (1) tel que décrit dans l'une quelconque des revendications précédentes, comprenant en outre au moins un ensemble de barres omnibus de connexion de ligne (2), une barre omnibus de distribution (12), au moins un moyen de mesure (3), au moins une connexion de ligne auxiliaire (18), et au moins une sortie de circuit auxiliaire (4), **caractérisé en ce qu'**il comprend en outre une structure (15) sur laquelle au moins un moyen de commutation et de protection (1) est installé, dans lequel la structure (15) comprend en outre :
- des brides (16) pour la fixation mécanique à des brides (16) correspondantes situées dans le moyen de commutation et de protection (1), et
- une protection mécanique (21) qui empêche un contact avec la barre omnibus de distribution (12) et avec les conducteurs de dérivation (19) une fois que le boîtier (9) est découplé de ladite structure (15).
